# EUROPEAN PATENT SPECIFICATION

(11) **EP 1 509 164 B1**
(45) Date of publication and mention of the grant of the patent: **24.03.2010**
(21) Application number: 03714573.7
(22) Date of filing: 11.04.2003
(51) Int. Cl.: A61C 17/22, A61C 17/34

(54) **ELECTRIC TOOTHBRUSH**
ELEKTRISCHE ZAHNBÜRSTE
BROSSE A DENTS ELECTRIQUE

(30) Priority: 04.06.2002 US 160034; 11.10.2002 CN 02131141; 15.12.2002 CA 2412674
(43) Date of publication of application: 02.03.2005
(73) Proprietor: Zhuan, Qingping, Brampton, Ontario L6X 1Y7 (CA)
(72) Inventor: Zhuan, Qingping, Brampton, Ontario L6X 1Y7 (CA)
(74) Representative: Heusler, Wolfgang
(86) International application number: PCT/CA2003/000551
(87) International publication number: WO 2003/101337

(56) References cited:
- WO-A-01/82826
- US-A- 5 020 179
- US-A1- 2001 029 639
- US-A1- 2002 138 927

## Description

### TECHNICAL FIELD

This invention relates to an electric toothbrush according to the preamble of claim 1, as known from US 5,416,942.

### BACKGROUND OF THE INVENTION

Electric toothbrushes are popular since these toothbrushes can provide a higher level of cleaning compared to that obtainable with manual toothbrushes. In general, electric toothbrushes comprise a base which functions as a handle, a shaft that extends from the base, and a tuft assembly (i. e. brush head), having bristles, located at the distal end of the shaft. The electric toothbrush further comprises an electric motor located in the base and a transmission located in the base and/or the shaft. During use, the electric motor provides rotational energy to the transmission, which in turn provides rotational motion to the tuft assembly to provide brushing action to clean the teeth of the electric toothbrush user.

The bristles on the tuft assembly can become worn due to usage over time and should be replaced. In this case, some electric toothbrushes provide a shaft that is removably attachable to the base of the electric toothbrush so that the tuft assembly can be replaced. However, the cost of replacing the tuft assembly is increased since both the shaft and the tuft assembly are replaced while usually only the tuft assembly needs to be replaced.

US 5,416,942 discloses a motorized toothbrush comprising a handle at one send of which is provided a brushing head rotating about an axis which is approximately perpendicular to the longitudinal axis of the handle and is turned with a continuous or reciprocating rotary motion by an electric motor housed in the handle. The brushing head is composed of two separate tool parts that are supported coaxially with respect to each other in such way that they can rotate relative to each other, being turned in mutually opposite directions in the case of continuous rotation and in phase opposition to each other in the case of reciprocating rotation. The rotary motion of the motor spindle is converted to the motion of the tool parts by a V-shaped eccentric end of the spindle formed by two arms extending into respective slots of the tool parts. A similar toothbrush is also disclosed in GB 2 359 739 A.

### SUMMARY OF THE INVENTION

The invention is as claimed in claim 1.

The present invention is directed towards an electric toothbrush that has a main body with an electric motor mounted therein. The toothbrush has a tuft assembly that is rotatably coupled to the main body, and a transmission that is operatively connected to the electric motor to provide rotational motion to the tuft assembly. The toothbrush also has an adaptor that is pivotally connected to the tuft assembly and also slidably connected to the transmission. The adaptor converts the rotational motion from the transmission to provide reciprocal rotational motion to the tuft assembly.

In another aspect, the invention is directed towards an electric toothbrush having a replaceable tuft assembly. The electric toothbrush comprises a main body, an electric motor mounted in the main body, a support member coupled to the main body, a tuft assembly which is releasably attachable to the support member and a transmission that is operatively connected to the electric motor to provide rotational motion to the tuft assembly. The support member has a first connection member and the tuft assembly has a second connection member. The first and second connection members are adapted to allow rotational motion of the tuft assembly with respect to the main body.

In another aspect, the present invention is directed to an electric toothbrush comprising a main body, an electric motor mounted in the main body, a support member coupled to the main body, a tuft assembly releasably attachable to the support member, a transmission operatively connected to the electric motor and adapted to provide rotational motion to the tuft assembly, and an adaptor. The adaptor can be releasably connectable to the tuft assembly and converts the rotational motion from the transmission to reciprocal rotational motion for urging the tuft assembly to reciprocally rotate. Furthermore, the support member has a first connection member and the tuft assembly has a second connection member. The first and second connection members are adapted to allow rotational motion of the tuft assembly with respect to the main body.

### BRIEF DESCRIPTION OF THE DRAWINGS

For a better understanding of the present invention and to show more clearly how it may be carried into effect, reference will now be made, by way of example only, to the accompanying drawings which show preferred embodiments of the present invention and in which:
Figure 1 is a perspective view of an electric toothbrush;
Figure 2 is a cross-sectional side view the electric toothbrush of Figure 1;
Figure 3a is an exploded cross-sectional side view of a portion of the electric toothbrush of Figure 1 showing a tuft assembly and an adaptor;
Figure 3b is an exploded perspective bottom view of the tuft assembly and the adaptor of Figure 3a;
Figure 3c is an exploded perspective view of the portion of the electric toothbrush shown in Figure 3a;
Figure 4a is an exploded cross-sectional side view of a portion of the electric toothbrush of Figure 1 showing an alternative embodiment of the tuft assembly and the adaptor of Figure 3a;
Figure 4b is an exploded perspective bottom view of the tuft assembly and the adaptor of Figure 4a;
Figure 4c is an exploded perspective view of the portion of the electric toothbrush shown in Figure 4a;
Figure 5a is a cross-sectional side view of a portion of the electric toothbrush showing another alternate embodiment of the tuft assembly and adaptor;
Figure 5b is an exploded cross-sectional view of Figure 5a;
Figure 5c is an exploded cross-sectional, perspective view of the electric toothbrush of Figure 5a;
Figure 5d is an exploded perspective view of the electric toothbrush of Figure 5a;
Figure 6a is a cross-sectional side view of a portion of the electric toothbrush of Figure 3a with the eccentric end of the transmission at the 12 o'clock position;
Figure 6b is a cross-sectional end view of a portion of the electric toothbrush of Figure 3a with the eccentric end of the transmission at the 12 o'clock position;
Figure 6c is a cross-sectional bottom view of a portion of the electric toothbrush of Figure 3a with the eccentric end of the transmission at the 12 o'clock position;
Figure 6d is a cross-sectional side view of a portion of the electric toothbrush of Figure 3a with the eccentric end of the transmission at the 3 o'clock position;
Figure 6e is a cross-sectional end view of a portion of the electric toothbrush of Figure 3a with the eccentric end of the transmission at the 3 o'clock position;
Figure 6f is a cross-sectional bottom view of a portion of the electric toothbrush of Figure 3a with the eccentric end of the transmission at the 3 o'clock position;
Figure 6g is a cross-sectional side view of a portion of the electric toothbrush of Figure 3a with the eccentric end of the transmission at the 6 o'clock position;
Figure 6h is a cross-sectional end view of a portion of the electric toothbrush of Figure 3a with the eccentric end of the transmission at the 6 o'clock position;
Figure 6i is a cross-sectional bottom view of a portion of the electric toothbrush of Figure 3a with the eccentric end of the transmission at the 6 o'clock position;
Figure 6j is a cross-sectional side view of a portion of the electric toothbrush of Figure 3a with the eccentric end of the transmission at the 9 o'clock position;
Figure 6k is a cross-sectional end view of a portion of the electric toothbrush of Figure 3a with the eccentric end of the transmission at the 9 o'clock position;
Figure 6l is a cross-sectional bottom view of a portion of the electric toothbrush of Figure 3a with the eccentric end of the transmission at the 9 o'clock position;
Figure 7a is a cross-sectional side view of a portion of the electric toothbrush of Figure 5a with the eccentric end of the transmission at the 12 o'clock position;
Figure 7b is a cross-sectional end view of a portion of the electric toothbrush of Figure 5a with the eccentric end of the transmission at the 12 o'clock position;
Figure 7c is a cross-sectional bottom view of a portion of the electric toothbrush of Figure 5a with the eccentric end of the transmission at the 12 o'clock position;
Figure 7d is a cross-sectional side view of a portion of the electric toothbrush of Figure 5a with the eccentric end of the transmission at the 3 o'clock position;
Figure 7e is a cross-sectional end view of a portion of the electric toothbrush of Figure 5a with the eccentric end of the transmission at the 3 o'clock position;
Figure 7f is a cross-sectional bottom view of a portion of the electric toothbrush of Figure 5a with the eccentric end of the transmission at the 3 o'clock position;
Figure 7g is a cross-sectional side view of a portion of the electric toothbrush of Figure 5a with the eccentric end of the transmission at the 6 o'clock position;
Figure 7h is a cross-sectional end view of a portion of the electric toothbrush of Figure 5a with the eccentric end of the transmission at the 6 o'clock position;
Figure 7i is a cross-sectional bottom view of a portion of the electric toothbrush of Figure 5a with the eccentric end of the transmission at the 6 o'clock position;
Figure 7j is a cross-sectional side view of a portion of the electric toothbrush of Figure 5a with the eccentric end of the transmission at the 9 o'clock position;
Figure 7k is a cross-sectional end view of a portion of the electric toothbrush of Figure 5a with the eccentric end of the transmission at the 9 o'clock position;
Figure 7l is a cross-sectional bottom view of a portion of the electric toothbrush of Figure 5a with the eccentric end of the transmission at the 9 o'clock position;
Figure 8a is a cross-sectional side view of an alternate embodiment of the electric toothbrush having an alternate transmission;
Figure 8b is an exploded front perspective view of a portion of the electric toothbrush of Figure 8a;
Figure 8c is an exploded rear perspective view of a portion of the electric toothbrush of Figure 8a;
Figure 9a is a cross-sectional side view of an alternate embodiment of the electric toothbrush having another alternate transmission;
Figure 9b is an exploded front perspective view of a portion of the electric toothbrush of Figure 9a; and,
Figure 9c is an exploded rear perspective view of a portion of the electric toothbrush of Figure 9a.

### DETAILED DESCRIPTION OF THE PREFERRED EMBODIMENTS

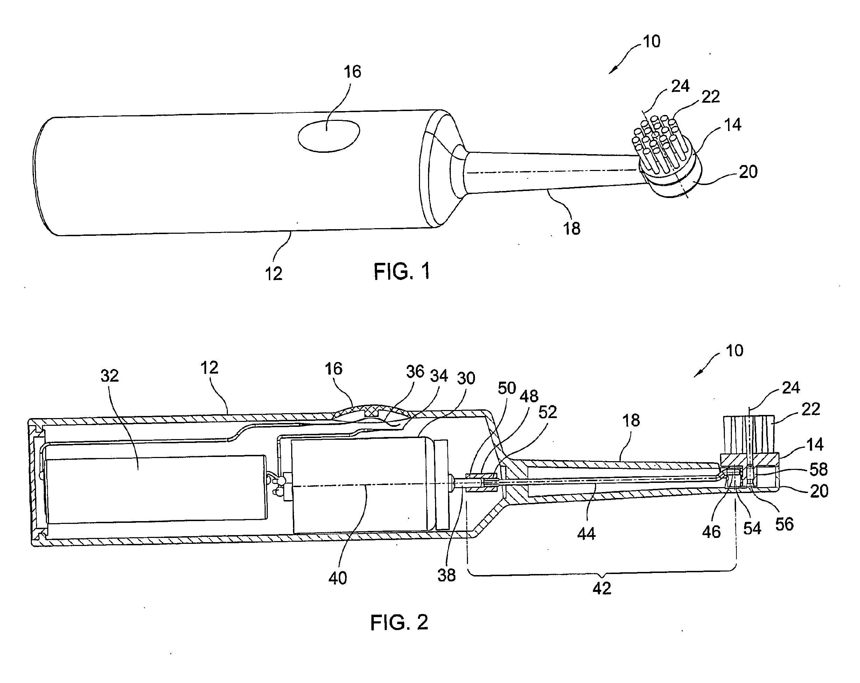

Referring now to Figure 1, shown therein is an electric toothbrush **10** having a main body **12,** a tuft assembly **14** and an actuation means **16.** The main body **12** further comprises a shaft **18** and a support member **20.** The tuft assembly **14** is removably connectable to the support member **20** as will be described further below. The tuft assembly **14** has a plurality of bristles **22** which are used to clean the teeth of the user of the electric toothbrush **10.** As shown, the bristles **22** may be in a circular arrangement and extend along an axis that is generally orthogonal to the shaft **18.** Alternatively, the bristles **22** may have another suitable arrangement and extend along an axis that is at some other angle with respect to the shaft **18.**

In use, the user of the electric toothbrush **10** activates the electric toothbrush **10** via the actuation means **16,** which may be a button, a toggle switch, a slide switch or the like. When the electric toothbrush **10** is active, the tuft assembly **14** rotates in a reciprocating fashion about brush rotation axis **24** to provide a back-and-forth brushing action. The user of the electric toothbrush **10** then applies the bristles 22 to his or her teeth to clean the teeth as required.

Referring now to Figure 2, the electric toothbrush **10** further comprises an electric motor **30,** a power source **32** and electrical leads **34** and **36** which together form an electrical circuit. When the actuation means **16** is actuated to activate the electric toothbrush **10,** the electrical leads **34** and **36** come into contact to supply power to the electric motor **30** from the power source **32.** The electric motor **30,** which is mounted in the main body **12,** may be any suitable compact electric motor. The power source **32** may preferably be a battery, but may alternately be a connection to an external power source, such as, for example, an electric wire and plug for connection to a standard 120 Volt AC source.

The electric motor **30** has an output shaft **38** that rotates about motor axis **40** when the electric toothbrush **10** is active. The output shaft **38** is drivingly connected to a transmission **42** to provide rotational motion to the tuft assembly **14.** In this embodiment, the transmission **42** comprises a drive shaft **44** having an eccentric end **46** and a connector **48** having first and second ends **50** and **52.** The connector **48** has a slot in the first end **50** to couple with the output shaft **38** of the electric motor **30.** The connector **48** also has a slot in the second end **52** to couple with the drive shaft **44.** These slots may have any shape necessary to provide coupling with the aforementioned parts.

The main body **12** surrounds the electric motor **30,** the power source **32** and the transmission **42** and can provide a base for mounting these parts. The main body **12** is made from a suitable, water impermeable plastic to prevent water from damaging the internal components of the electric toothbrush **10** and to prevent a user from potential harm during use. Alternatively, the main body **12** may be made from other suitable, water impermeable materials, such as a suitable metal, or from a composite of materials such as metal and plastic.

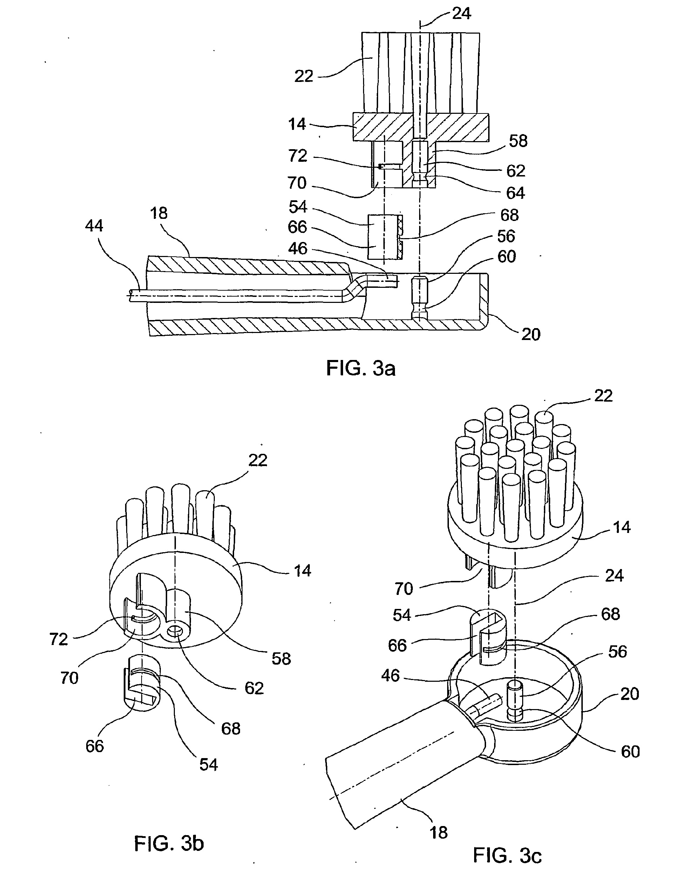

Referring now to Figures 3a to 3c, the support member **20** has a first connection member **56** and the tuft assembly **14** has a second connection member **58.** The first connection member **56** comprises an elongate body with a groove **60** on an outer surface thereof. The second connection member **58** comprises a cylindrical body having an inner channel **62** with a rib **64.** The first and second connection members **56** and **58** are dimensioned to be releasably attachable by "snapping" the first and second connection members **56** and **58** apart from each other so that the tuft assembly **14** may be replaced when it is damaged or the bristles **22** are wom down to the point that they can no longer provide sufficient cleaning action. The first and second connection members **56** and **58** are also dimensioned so that the second connection member **58** may rotate about the first connection member **56.** Accordingly, the inner channel **62,** not including the portion having the rib **64,** has a diameter which is generally slightly larger than the diameter of the elongate body of the first connection member **56,** not including the portion having the groove **60,** so that the inner channel **62** may receive the elongate body while also allowing for rotational movement of the second connection member **58** about the central vertical axis of the first connection member **56.** To ensure that the second connection member **58** remains mounted about the first connection member **56** when the electric toothbrush **10** is active, the inner channel **62** has the rib **64** that engages the groove **60** of the elongate body. The rib **64** and the groove **60** facilitate the snap-action alluded to earlier. Once again, to ensure rotation of the second connection member **58** about the axis of the first connection member **56,** there is some space between the rib **64** and the groove **60.** In addition, to ensure that the tuft assembly **14** is removably attachable to the support member **20,** at least one of the first and second connection members **56** and **58** is made from a resilient material. In an alternative embodiment, the position of the first and second connection members **56** and **58** may be reversed, i.e., the first connection member **56** may be located on the tuft assembly **14** and the second connection member 58 may be located on the support member **20.**

Still referring to Figures 3a to 3c, the tuft assembly **14** further comprises an adaptor **54** that is used to transform the rotational motion of the drive shaft **44** into reciprocating rotational motion to facilitate the forward-and-backward brushing action of the electric toothbrush **10.** In this embodiment, the adaptor **54** comprises a cylindrical body having a slot **66** and a first coupling member **68.** The slot 66 is dimensioned to accommodate the eccentric end **46** of the drive shaft **44** and has a vertical extent that accommodates the vertical displacement of the tip of the eccentric end **46** as the drive shaft **44** rotates while the electric toothbrush **10** is in operation. The first coupling member **68** may be at least one groove shaped so that the adaptor **54** releasably engages the tuft assembly **14** (although only one groove is shown in Figures 3a to 3c).

The tuft assembly **14** further comprises an inner recess **70** having thereon a second coupling member **72.** The inner recess **70** is shaped to receive the adaptor **54**. Accordingly, since the adaptor **54** has a cylindrical body in this embodiment, the inner recess **70** has a cylindrical, concave shape to mate with the adaptor **54** when the adaptor **54** is placed within the inner recess **70.** In addition, the second coupling member **72** may be at least one rib (although only one rib is shown in Figures 3a to 3c) which is shaped to releasably engage the at least one groove on the adaptor **54** when the adaptor **54** is placed within the inner recess **70** of the tuft assembly **14.** In addition, the adaptor **54,** the inner recess **70** and the first and second coupling members **68** and **72** are shaped so that the adaptor **54** may preferably freely move with respect to the inner recess **70** or the tuft assembly **14.** However, the adaptor **54** is always retained within the recess **70** when the toothbrush **10** is In operation. Accordingly, the at least one groove (i.e. the first coupling member **68**) may not totally encircle the adaptor **54** but may extend along only a portion of the circumference of the adaptor **54** while still engaging the at least one rib (i.e. the second coupling member **72**) which may correspondingly extend along only a portion of the circumference of the inner recess **70**. However, the dimension of the first and second coupling members **68** and **72** must cooperate with the motion of the eccentric end **46** of the transmission **42** as discussed below.

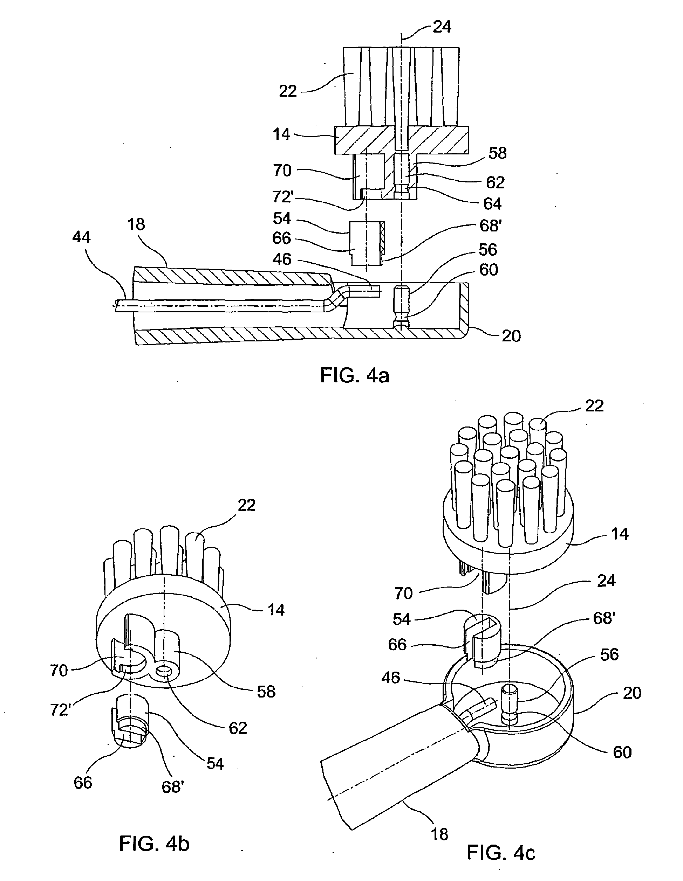

In alternative embodiments, the shape of the adaptor **54** and the inner recess **70** may be varied. For instance, referring to Figures 4a to 4c, the first coupling member **68'** may be a groove located at the bottom of the adaptor **54** and the second coupling member **72'** may be a rib located at the bottom of the inner recess **70** (i.e. see Figures 4a to 4c). In a further alternative embodiment, the first coupling member **68** may be at least one rib and the second coupling member **72** may be at least one groove located in a complementary fashion to the first coupling member **68.**

In the embodiments of Figures 3a to 3c and 4a to 4c, either the tuft assembly **14** or the adaptor **54** may be replaced. This is beneficial since the adaptor **54** may become worn out after a period of time while the tuft assembly **14** may still be useable. The converse may also be true. Alternatively, both the tuft assembly **14** and the adaptor **54** may be replaced at the same time. For example, it may be convenient to provide the tuft assembly **14** and the adaptor **54** as a single unit.

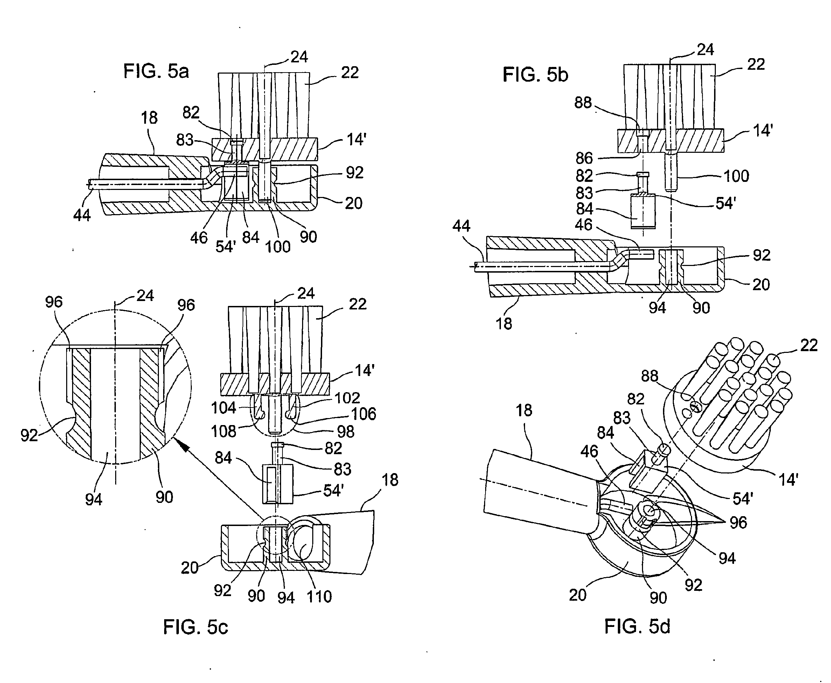

Referring now to Figures 5a to 5d, an alternate embodiment of the tuft assembly **14** and the adaptor **54** is shown, indicated as **14'** and **54'** respectively. The tuft assembly **14'** now comprises an inner recess **86** and an aperture **88** and no longer comprises the inner recess **70** having the second coupling member **72.** The diameter of the aperture **88** is slightly larger than the diameter of the inner recess **86.** Furthermore, the adaptor **54'** now comprises a head **82,** a neck **83** and a slot **84.** The head **82** and neck **83** of the adaptor **54'** are dimensioned to movingly engage the aperture **88** and the inner recess **86** respectively to ensure that, when the electric toothbrush **10** is active, the adaptor **54'** moves relative to the tuft assembly **14'** while still urging the tuft assembly **14'** to move in a reciprocating fashion around the brush rotation axis **24.**

The adaptor **54'** and the tuft assembly **14'** may now be replaced as one piece (whereas in the previous embodiment one or both of the tuft assembly **14** and the adaptor **54** may be replaced). Alternatively, at least one of the head **82** of the adaptor **54'**, and the inner recess **86** may be made of resilient material to allow the adaptor **54'** to be attached or detached from the tuft assembly **14'** while still allowing the adaptor **54'** to be kept in place while the toothbrush **10** is in operation. The adaptor **54'** may alternatively have a different outer shape or the slot **84** may not pass throughout the entirety of the adaptor **54'.**

In Figures 5a to 5d, there is also a different embodiment of the first and second connection members **56** and **58,** now indicated as **90** and **98.** The first connection member **90** now has a groove **92,** a bore **94** and guide grooves **96.** The second connection member **98** now comprises a post **100** and prongs **102** and **104** having ribs **106** and **108** respectively. The first and second connection members **90** and **98** still allow the tuft assembly **14'** to be releasably attachable to the support member **20.** In particular, the post **100** is dimensioned to be slidably releasably received by the bore **94.** In addition, the prongs **102** and **104** are spaced apart from the post **100** so that the ribs **106** and **108** on the prongs **102** and **104** engage the groove **92.** The dimensions of the first and second connection members **90** and **98** are also such that these members form a snap-fit connection while still allowing the second connection member **98** to rotate about the first connection member **90.** Accordingly, the diameter of the post **100** and the spacing between the ribs **106** and **108** and the groove **92** is sufficient to allow the tuft assembly **14'** to reciprocally rotate about the first connection member **90.**

The guide grooves **96** provide channels through which the ribs **106** and **108** slide when the user of the electric toothbrush **10** is attaching or detaching the tuft assembly **14'** and the support member **20.** Accordingly, the prongs **102** and **104** must be lined up with the guide grooves **96** when the second connection member **98** is being attached to or detached from the first connection member **90.** Also visible from Figure 5c is an opening **110** through which the eccentric end **46** of the drive shaft **44** protrudes to operatively engage the slot **84** of the adaptor **54'.**

In alternative embodiments, the second connection member **98** may only have one prong or more than two prongs. In either case, the number of guide grooves **96** can be adjusted to be twice the number of prongs. Alternatively, there may be a fixed number of guide grooves **96** (such as four guide grooves) so that a variety of tuft assemblies having a different number of prongs may be accommodated. In a further alternative, the first connection member **90** may be located on the tuft assembly **14'** and the second connection member **98** may be located on the support member **20.**

In use, the drive shaft **44** and the eccentric end **46** provide rotational motion about an axis that is parallel to the motor axis **40.** Since the eccentric end **46** is displaced from the motor axis **40,** the tip of the eccentric end **46** traces out a circle during one rotation of the drive shaft **44.** The radius of this circle is equivalent to the radial displacement of the tip of the eccentric end **46** from the axis of the drive shaft **44.** As the tip of the eccentric end **46** traces out this circle in a clockwise fashion, the tip of the eccentric end **46** drives the adaptor **54 (54'),** and thus the tuft assembly **14 (14'),** in a reciprocating rotating fashion, perpendicular to the slot **66 (84),** about the brush rotation axis **24,** as will now be described.

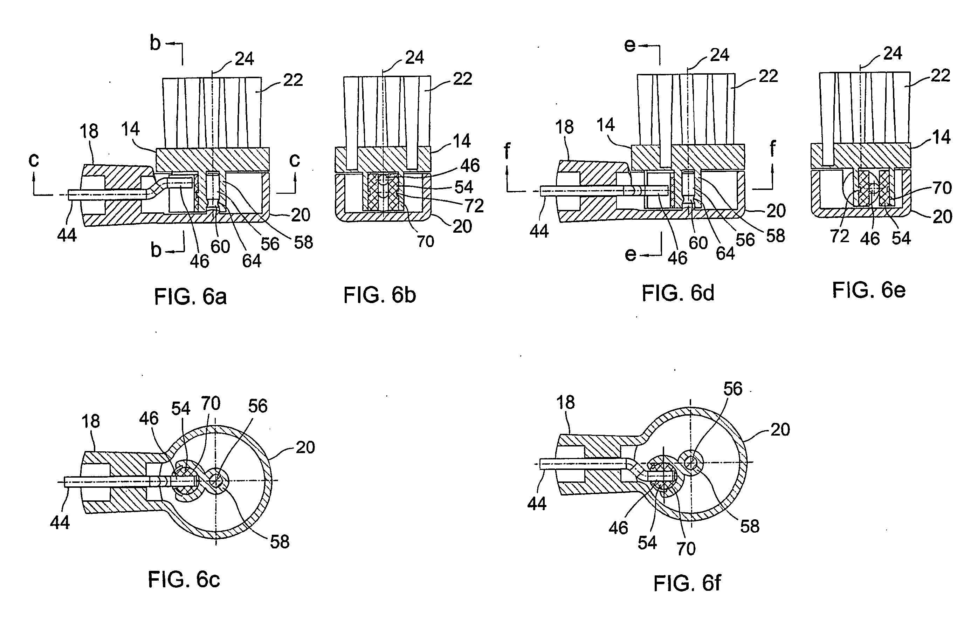

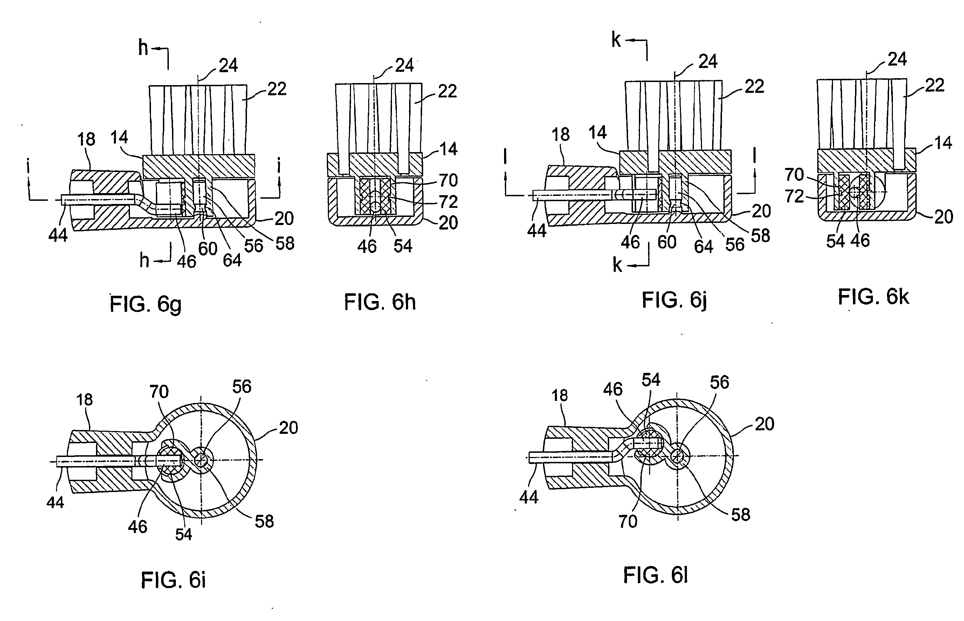

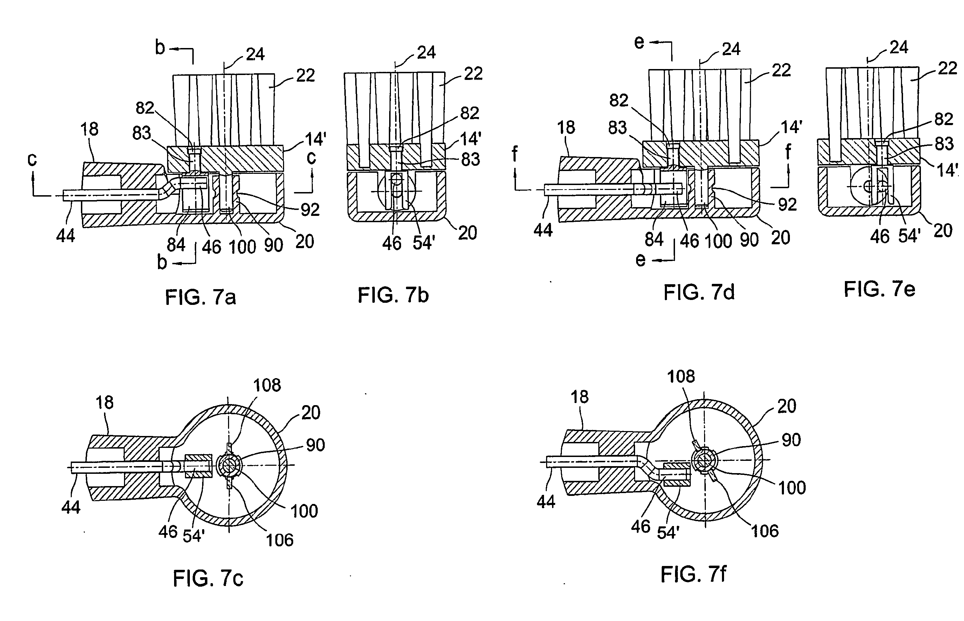

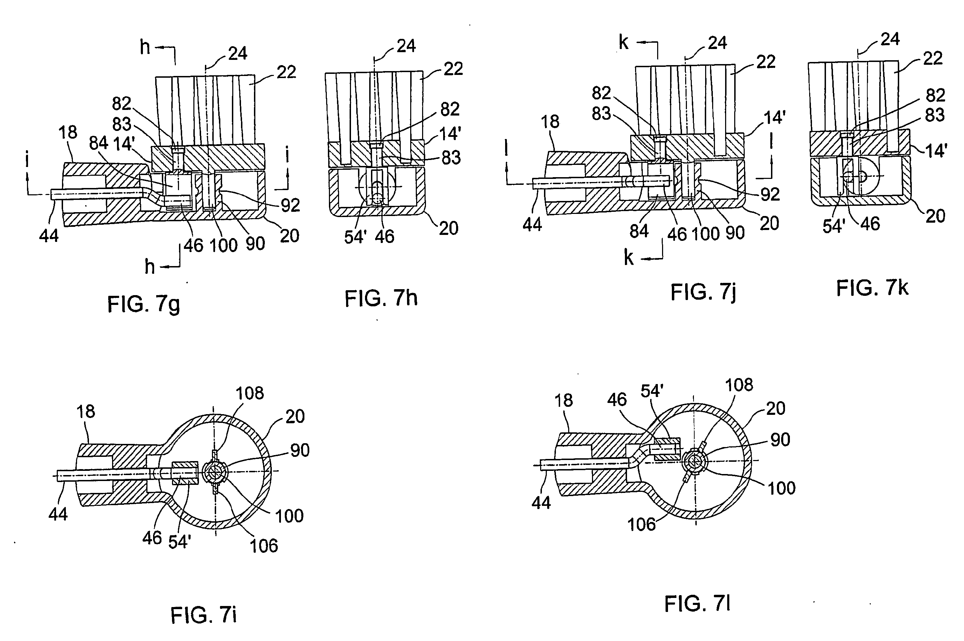

Referring now to Figures 6a to 7l, Figures 6a to 6l (which represent the embodiment shown in Figures 3a to 3c although the embodiment shown in Figures 4a to 4c could also be used) and figures 7a to 7l (which represent the embodiment shown in Figures 5a to 5c) show different views of the position of the tuft assembly **14 (14')** and the adaptor **54 (54')** during the operation of the electric toothbrush **10.** For orientation purposes, looking along the shaft **18** in a direction away from the tuft assembly **14 (14')** (i.e. in the direction shown by any of the arrows b-b, e-e, h-h, and k-k), and considering the start position to be the position of the adaptor **54 (54')** when the tip of the eccentric end **46** is at the 12 o'clock position (i.e. Figures 6a to 6c and 7a to 7c), as the tip of the eccentric end **46** rotates to the 3 o'clock position, the slot **66 (84)** in the adaptor **54 (54')** travels to the right to its outermost right position (i.e. Figures 6d to 6f and 7d to 7f). The tip of the eccentric end **46** then rotates to the 6 o'clock position and the slot **66 (84)** in the adaptor **54 (54')** travels to the left back to the start position (i.e. Figures 6g to 6i and 7g to 7i). As the tip of the eccentric end **46** then rotates to the 9 o'clock position, the slot **66 (84)** in the adaptor **54 (54')** travels to the left to its outermost left position (i.e. Figures 6j to 6l and 7j to 7l) and as the tip of the eccentric end **46** then rotates to the 12 o'clock position, the slot **66 (84)** in the adaptor **54 (54')** travels to the right back to the starting position (i.e. Figures 6a to 6c and 7a to 7c). Thus during one rotation of the drive shaft **44,** the tuft assembly **14 (14')** performs one cycle of forward and backward cleaning action. Alternatively, the eccentric end **46** may trace out this circle in a counter-clockwise fashion.

Figures 6c, 6f, 6i, 6l and Figures 7c, 7f, 7i and 7l show that the eccentric end **46** remains fully engaged in (i.e. in full alignment with) the adaptor **54 (54')** since the adaptor **54 (54')** is able to pivot relative to the tuft assembly **14 (14').** Furthermore, if the transmission **42** were to drive the adaptor **54 (54')** in a reciprocating rotational fashion, then the adaptor **54 (54')** would simply transfer this reciprocating rotational motion to the tuft assembly **14 (14').** Accordingly, due to the physical arrangement between the adaptor **54 (54')** and the tuft assembly **14 (14'),** the adaptor **54 (54')** can accommodate both a continuously rotating and a reciprocally rotating transmission (i.e. the transmission **42** may provide rotational motion that is continuous or reciprocating).

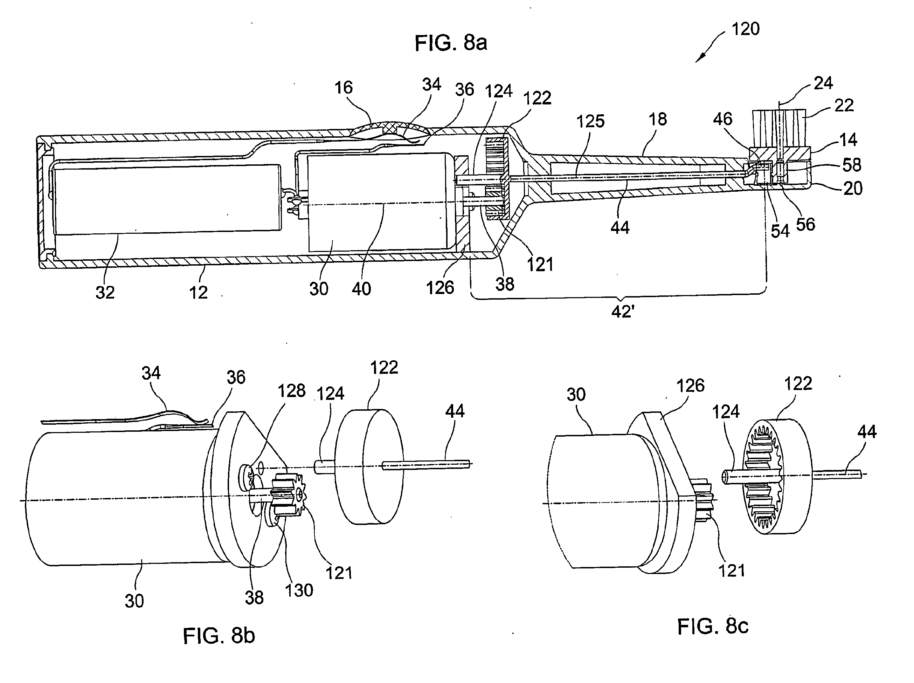

Referring now to Figures 8a to 8c, shown therein is an alternative embodiment of an electric toothbrush **120** having an alternate transmission **42'.** The rest of the components of the electric toothbrush **120** are similar to those of the electric toothbrush **10** and will not be described. The transmission **42'** comprises a speed transformer to modify the rotational speed of the tuft assembly **14** with respect to the rotational speed of the output shaft **38.** The transmission **42'** comprises the drive shaft **44** having the eccentric end **46,** the speed transformer comprising a pinion gear **121,** a inner gear **122,** and a shaft **124.** The pinion gear **121** is mounted on the output shaft **38** of the electric motor **30** so that the drive rotation axis **125** is offset from the motor axis **40.** The inner gear **122** is mounted on the shaft **124,** which is rotatably mounted on a plate **126.** The plate **126** is secured to the electric motor **30** via fastening means **128** and **130** which may be screws or the like. The pinion gear **121** meshes with the inner gear **122** to cause the inner gear **122** to rotate when the output shaft **38** rotates. The inner gear **122** has a face from which the drive shaft **44** extends to receive the rotational motion of the inner gear **122** and transfer the rotational motion to the tuft assembly **14.** The relative radii of the pinion gear **121** and the inner gear **122** may be selected to achieve a desired rotational speed for the tuft assembly **14** based on the rotational speed of the output shaft **38** as is well known to those skilled in the art. Either of the embodiments of the tuft assembly **14, 14',** the adaptor **54, 54',** and the first and second connection members **56, 90** and **58, 98** may be used with the transmission **42'** (although the tuft assembly **14,** the adaptor **54** and the first and second connection members **56** and **58** from Figures 3a to 3c are shown in Figure 8a).

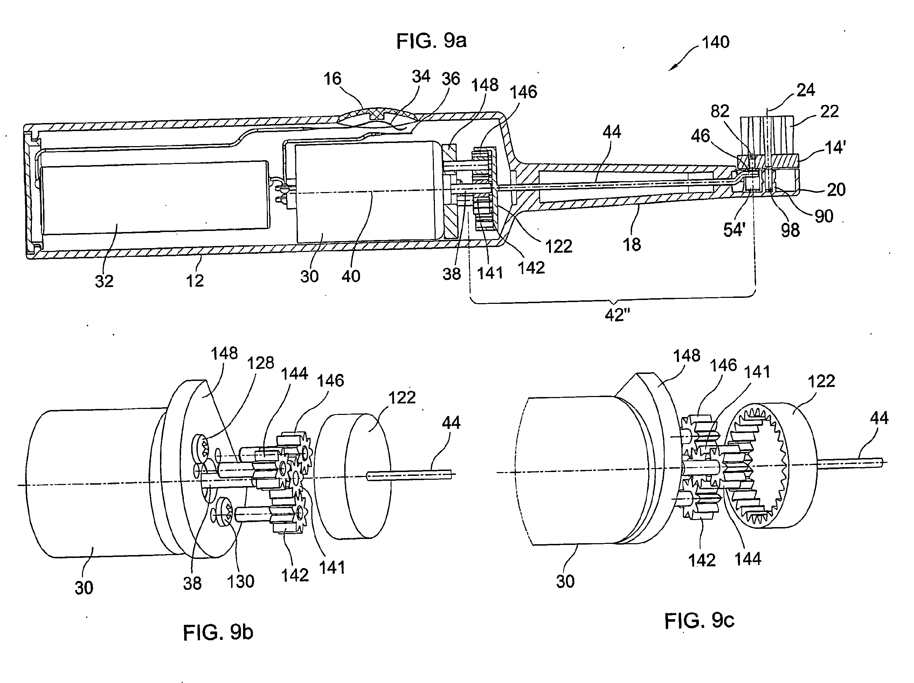

Referring now to Figures 9a to 9c, shown therein is an alternative embodiment of an electric toothbrush **140** having an alternate transmission **42".** The rest of the components of the electric toothbrush **140** are similar to those of the electric toothbrush **10** and will not be described. The transmission **42"** comprises an alternative speed transformer to modify the rotational speed of the tuft assembly **14'** with respect to the rotational speed of the output shaft **38.** The transmission **42"** comprises the drive shaft **44** having the eccentric end **46** and the speed transformer comprising central gear **141,** satellite gears **142, 144** and **146** and inner gear **122.** The central gear **141** is mounted on the output shaft **38** of the electric motor **30.** The satellite gears **142, 144** and **146** are mounted on shafts that are uniformly distributed about the central gear **141.** These shafts are rotatably mounted on plate **148.** The inner gear **122** is mounted so that each one of the satellite gears **142, 144** and **146** meshes with the inner gear **122** to cause the inner gear **122** to rotate when the output shaft **38** rotates. The inner gear **122** has a face from which the drive shaft **44** extends to receive the rotational motion of the inner gear **122** and transfer the rotational motion to the tuft assembly **14'.** The relative radii of the central gear **141,** the satellite gears **142, 144** and **146,** and the inner gear **122** may be selected to achieve a desired rotational speed for the tuft assembly **14'** based on the rotational speed of the output shaft **38** as is well known to those skilled in the art. Either of the embodiments of the tuft assembly **14, 14'**, the adaptor **54, 54'**, and the first and second connection members **56, 90** and **58, 98** may be used with the transmission **42"** (although the tuft assembly **14',** the adaptor **54'** and the first and second connection members **90** and **98** from Figures 5a to 5d are shown in Figure 9a).

It should be understood that various modifications can be made to the preferred embodiments described and illustrated herein, without departing from the present invention, the scope of which is defined in the appended claims.

## Claims

1. Electric toothbrush, comprising:
a) a main body (12);
b) an electric motor (30) mounted in said main body (12);
c) a support member (20) coupled to said main body, said support member (20) having a first connection member (56);
d) a tuft assembly (14) releasably attachable to said support member (20), said tuft assembly having a second connection member (58);
e) a transmission (42) operatively connected to said electric motor (30), said transmission adapted to provide rotational motion to said tuft assembly (14);
f) an adaptor (54, 54') coupled to the tuft assembly (14) for converting the rotational motion from the transmission (42) to provide reciprocal rotational motion to said tuft assembly (14);
g) said second connection member (58) being rotatably coupled to said first connection member (56);
h) the transmission (42) being rotatable and having an eccentric end (46); and
i) the adaptor (54, 54') having a slot (66, 84) extending vertically with respect to the rotation axis of said transmission (42) and dimensioned to slidably accommodate said eccentric end (46); **characterized by**
k) said adaptor (54, 54') being pivotally connected to said tuft assembly (14).

2. The electric toothbrush of claim 1, wherein one of said connection members (56, 90) has an elongate body with a groove (60, 92) on an outer surface thereof and the other of said connection members (58, 98) has at least one protrusion (64, 106, 108) adapted to releasably engage said groove.

3. The electric toothbrush of claim 2, wherein said at least one protrusion comprises a cylindrical body having an inner channel (62) with a rib (64) on an inner surface thereof, said inner channel and said rib dimensioned to releasably engage said elongate body and allow for rotational movement of said tuft assembly (14).

4. The electric toothbrush of claim 2, wherein said elongate body has a bore, and said at least one protrusion comprises a post (100) and at least one prong (102, 104) having one rib (106, 108), said post dimensioned to slidably engage said bore and said at least one prong being spaced apart from said post to releasably engage said groove (92) on said outer surface of said elongate body and allow for rotational movement of said tuft assembly (14).

5. The electric toothbrush of claim 4, wherein said elongate body has at least one guide groove (96) on said outer surface for guiding said at least one prong (102, 104) when said connection members (90, 98) are attached and detached.

6. The electric toothbrush of claim 5, wherein said elongate body has twice as many guide grooves (96) as prongs (102, 104).

7. The electric toothbrush of claim 1, wherein said adaptor (54, 54') comprises a first coupling member (68, 68', 82) on an outer surface of said adaptor (54, 54'), and said tuft assembly (14) further comprises an inner recess (70, 86) having a second coupling member (72, 72', 88) dimensioned to releasably engage said first coupling member (68, 68', 82), wherein said inner recess (70, 86) is dimensioned to releasably receive the outer surface of said adaptor (54, 54').

8. The electric toothbrush of claim 1, wherein the adaptor (54, 59') has a cylindrical body (83), and the tuft assembly (14, 14') further comprises an inner recess (70, 86) dimensioned to rotatably receive the cylindrical body (83) of the adaptor (54, 54').

9. The electric toothbrush of claim 8, wherein the adaptor (54, 54') further comprises a first coupling member (68, 68', 82) positioned on the cylindrical body (83), the tuft assembly (14, 14') further comprises a second coupling member (72, 72', 88) positioned on the inner recess (70, 86), and said first and second coupling members are dimensioned to permit the inner recess (70, 86) of the tuft assembly (14, 14') to rotatably and releasably retain the adaptor (54, 54').

10. The electric toothbrush of claim 7, 8 or 9, wherein one of the coupling members is at least one groove (68, 68', 72, 88) and the other of the coupling members is at least one rib (72, 72', 68, 82).

11. The electrical toothbrush of anyone of the preceding claims, wherein said adaptor (54, 54') is releasably connected to the tuft assembly (14).

12. The electric toothbrush of claim 8, wherein said cylindrical body (54, 83) is offset from the rotation axis (24) of the tuft assembly (14).

13. The electric toothbrush of anyone of the preceding claims, wherein the transmission (42) comprises a drive shaft (44) having said eccentric end (46), said eccentric end extending parallel to said drive shaft (44).

## Patentansprüche

1. Elektrische Zahnbürste mit:
a) einem Hauptkörper (12);
b) einem in dem Hauptkörper (12) montierten elektrischen Motor (30);
c) einem mit dem Hauptkörper verbundenen Halteteil (20), wobei das Halteteil (20) ein erstes Verbindungsglied (56) hat;
d) einer an dem Halteteil (20) lösbar befestigbaren Borstenbüscheleinheit (14), wobei die Borstenbüscheleinheit ein zweites Verbindungsglied (58) hat;
e) einer operativ mit dem elektrischen Motor (30) verbundenen Transmissionseinheit (42), wobei die Transmissionseinheit in der Lage ist, die Borstenbüscheleinheit (14) in Drehbewegung zu versetzen;
f) einem Adapterteil (54, 54'), das mit der Borstenbüscheleinheit (14) gekoppelt ist, um die Drehbewegung von der Transmissionseinheit (42) in eine Pendeldrehbewegung der Borstenbüscheleinheit (14) umzuwandeln;
g) wobei das zweite Verbindungsglied (58) drehbar mit dem ersten Verbindungsglied (56) gekoppelt ist;
h) wobei die Transmissionseinheit (42) drehbar ist und ein exzentrisches Ende (46) hat; und
i) wobei das Adapterteil (54, 54') einen Schlitz (66, 84) hat, der sich senkrecht zu der Drehachse der Transmissionseinheit (42) erstreckt und für gleitende Aufnahme des exzentrischen Endes (46) bemessen ist;
**dadurch gekennzeichnet, dass**
k) das Adapterteil (54, 54') schwenkbar mit der Borstenbüscheleinheit (14) verbunden ist.

2. Die elektrische Zahnbürste nach Anspruch 1, wobei eines der Verbindungsglieder (56, 90) einen länglichen, auf einer Außenfläche mit einer Nut (60, 92) versehenen Körper hat und das andere der Verbindungsglieder (58, 98) mindestens einen Vorsprung (64, 106, 108) besitzt, der für lösbaren Eingriff in die Nut ausgebildet ist.

3. Die elektrische Zahnbürste nach Anspruch 2, wobei der mindestens eine Vorsprung einen zylindrischen Körper aufweist, der einen auf einer Innenfläche mit einer Rippe (64) versehenen inneren Kanal (62) hat, wobei der innere Kanal und die Rippe bemessen sind für lösbaren Eingriff des länglichen Körpers und um Drehbewegung der Borstenbüscheleinheit (14) zu erlauben.

4. Die elektrische Zahnbürste nach Anspruch 2, wobei der längliche Körper eine Bohrung hat und der mindestens eine Vorsprung ein Pfostenteil (100) und mindestens ein mit einer Rippe (106, 108) versehenes Zinkenteil (102, 104) aufweist, wobei das Pfostenteil für gleitenden Eingriff in die Bohrung bemessen ist und das mindestens eine Zinkenteil von dem Pfostenteil beanstandet ist für lösbaren Eingriff in die Nut (92) auf der Außenfläche des länglichen Körpers und um Drehbewegung der Borstenbüscheleinheit (14) zu erlauben.

5. Die elektrische Zahnbürste nach Anspruch 4, wobei der längliche Körper auf der Außenfläche mindestens eine Führungsnut (96) hat, um das mindestens eine Zinkenteil (102, 104) zu führen, wenn die Verbindungsglieder (90, 98) befestigt und gelöst werden.

6. Die elektrische Zahnbürste nach Anspruch 5, wobei der längliche Körper doppelt so viele Führungsnuten (96) hat wie Zinkenteile (102, 104) vorgesehen sind.

7. Die elektrische Zahnbürste nach Anspruch 1, wobei das Adapterteil (54, 54') auf einer Außenfläche des Adapterteils (54, 54') ein erstes Koppelglied (68, 68', 82) besitzt und die Borstenbüscheleinheit (14) ferner eine innere Ausnehmung (70, 86) aufweist, die ein für lösbaren Eingriff mit dem ersten Koppelglied (68, 68', 82) bemessenes zweites Koppelglied (72, 72', 88) hat, wobei die innere Ausnehmung (70, 86) für lösbare Aufnahme der Außenfläche des Adapterteils (54, 54') bemessen ist.

8. Die elektrische Zahnbürste nach Anspruch 1, wobei das Adapterteil (54, 54') einen zylindrischen Körper (83) hat und die Borstenbüscheleinheit (14, 14') ferner eine für drehbare Aufnahme des zylindrischen Körpers (83) des Adapterteils (54, 54') bemessene innere Ausnehmung (70, 86) aufweist.

9. Die elektrische Zahnbürste nach Anspruch 8, wobei das Adapterteil (54, 54') ferner ein auf dem zylindrischen Körper (83) positioniertes erstes Koppelglied (68, 68', 82) aufweist, die Borstenbüscheleinheit (14, 14') ferner ein auf der inneren Ausnehmung (70, 86) positioniertes zweites Koppelglied (72, 72', 88) aufweist und diese beiden Koppelglieder so bemessen sind, dass die innere Ausnehmung (70, 86) der Borstenbüscheleinheit (14, 14') das Adapterteil (54, 54') drehbar und lösbar halten kann.

10. Die elektrische Zahnbürste nach Anspruch 7, 8 oder 9, wobei eines der Koppelglieder mindestens eine Nut (68, 68', 72, 88) und das andere der Koppelglieder mindestens eine Rippe (72, 72', 68, 82) ist.

11. Die elektrische Zahnbürste nach einem der vorhergehenden Ansprüche, wobei das Adapterteil (54, 54') lösbar mit der Borstenbüscheleinheit (14) verbunden ist.

12. Die elektrische Zahnbürste nach Anspruch 8, wobei der zylindrische Körper (54, 83) gegen die Drehachse (24) der Borstenbüscheleinheit (14) versetzt ist.

13. Die elektrische Zahnbürste nach einem der vorhergehenden Ansprüche, wobei die Transmissionseinheit (42) eine Antriebswelle (44) aufweist, die das genannte exzentrische Ende (46) hat, wobei das exzentrische Ende sich parallel zu der Antriebswelle (44) erstreckt.

## Revendications

1. Brosse à dents électrique, comprenant:
a) un corps principal (12) ;
b) un moteur électrique (30) monté sur ledit corps principal (12) ;
c) un élément de support (20) couplé audit corps principal, ledit élément de support (20) ayant un premier élément de raccordement (56) ;
d) un ensemble de touffes (14) pouvant être fixé de manière amovible audit élément de support (20), ledit ensemble de touffes ayant un second élément de raccordement (58) ;
e) une transmission (42) raccordée de manière opérationnelle audit moteur électrique (30), ladite transmission étant adaptée pour fournir le mouvement de rotation audit ensemble de touffes (14) ;
f) un adaptateur (54, 54') couplé à l'ensemble de touffes (14) pour transformer le mouvement de rotation provenant de la transmission (42) afin de fournir un mouvement de rotation réciproque audit ensemble de touffes (14) ;
g) ledit second élément de raccordement (58) étant couplé de manière rotative audit premier élément de raccordement (56) ;
h) la transmission (42) pouvant tourner et ayant une extrémité excentrique (46) ; et
i) l'adaptateur (54, 54') ayant une fente (66, 84) s'étendant verticalement par rapport à l'axe de rotation de ladite transmission (42) et dimensionnée pour loger de manière coulissante ladite extrémité excentrique (46) ;
**caractérisée par** :
k) ledit adaptateur (54, 54') qui est raccordé de manière pivotante audit ensemble de touffes (14).

2. Brosse à dents électrique selon la revendication 1, dans laquelle l'un desdits éléments de raccordement (56, 90) a un corps allongé avec une rainure (60, 92) sur sa surface externe et l'autre desdits moyens de raccordement (58, 98) a au moins une saillie (64, 106, 108) adaptée pour mettre en prise ladite rainure de manière amovible.

3. Brosse à dents électrique selon la revendication 2, dans laquelle ladite au moins une saillie comprend un corps cylindrique ayant un canal interne (62) avec une nervure (64) sur sa surface interne, ledit canal interne et ladite nervure étant dimensionnés pour mettre en prise de manière amovible ledit corps allongé et permettre le mouvement de rotation dudit ensemble de touffes (14).

4. Brosse à dents électrique selon la revendication 2, dans laquelle ledit corps allongé a un alésage, et ladite au moins une saillie comprend un montant (100) et au moins une dent (102, 104) ayant une nervure (106, 108), ledit montant étant dimensionné pour mettre en prise de manière coulissante ledit alésage et ladite au moins une dent étant espacée dudit montant pour mettre en prise de manière amovible ladite rainure (92) sur ladite surface externe dudit corps allongé et permettre le mouvement de rotation dudit ensemble de touffes (14).

5. Brosse à dents électrique selon la revendication 4, dans laquelle ledit corps allongé a au moins une rainure de guidage (96) sur ladite surface externe pour guider ladite au moins une dent (102, 104) lorsque lesdits éléments de raccordement (90, 98) sont fixés et détachés.

6. Brosse à dents électrique selon la revendication 5, dans laquelle ledit corps allongé a deux fois plus de rainures de guidage (96) que de dents (102, 104).

7. Brosse à dents électrique selon la revendication 1, dans laquelle ledit adaptateur (54, 54') comprend un premier élément de couplage (68, 68', 82) sur une surface externe dudit adaptateur (54, 54'), et ledit ensemble de touffes (14) comprend en outre un évidement interne (70, 86) ayant un second élément de couplage (72, 72', 88) dimensionné pour mettre en prise de manière amovible ledit premier élément de couplage (68, 68', 82), dans laquelle ledit évidement interne (70, 86) est dimensionné pour recevoir de manière amovible la surface externe dudit adaptateur (54, 54').

8. Brosse à dents électrique selon la revendication 1, dans laquelle l'adaptateur (54, 54') a un corps cylindrique (83), et l'ensemble de touffes (14, 14') comprend en outre un évidement interne (70, 86) dimensionné pour recevoir de manière rotative le corps cylindrique (83) de l'adaptateur (54, 54').

9. Brosse à dents électrique selon la revendication 8, dans laquelle l'adaptateur (54, 54') comprend en outre un premier élément de couplage (68, 68', 82) positionné sur le corps cylindrique (83), l'ensemble de touffes (14, 14') comprend en outre un second élément de couplage (72, 72', 88) positionné sur l'évidement interne (70, 86) et lesdits premier et second éléments de couplage sont dimensionnés pour permettre à l'évidement interne (70, 86) de l'ensemble de touffes (14, 14') de retenir de manière rotative et amovible l'adaptateur (54, 54').

10. Brosse à dents électrique selon la revendication 7, 8 ou 9, dans laquelle l'un des éléments de couplage est au moins une rainure (68, 68', 72, 88) et l'autre des éléments de couplage est au moins une nervure (72, 72', 68, 82).

11. Brosse à dents électrique selon l'une quelconque des revendications précédentes, dans laquelle ledit adaptateur (54, 54') est raccordé de manière amovible à l'ensemble de touffes (14).

12. Brosse à dents électrique selon la revendication 8, dans laquelle ledit corps cylindrique (54, 83) est décalé de l'axe de rotation (24) de l'ensemble de touffes (14).

13. Brosse à dents électrique selon l'une quelconque des revendications précédentes, dans laquelle la transmission (42) comprend un arbre d'entraînement (44) ayant ladite extrémité excentrique (46), ladite extrémité excentrique s'étendant parallèlement audit arbre d'entraînement (44).
